# EUROPEAN PATENT APPLICATION

(11) **EP 0 871 242 A1**
(43) Date of publication of application: **14.10.1998**
(21) Application number: 98201838.4
(22) Date of filing: 05.10.1992
(51) Int. Cl.: H01R 4/24, H01R 13/52, H04Q 1/02

(54) **Telecommunications terminal block**

(30) Priority: 11.10.1991 US 776501
(62) Divisional of application: 92922043.2
(71) Applicant: RAYCHEM CORPORATION, Menlo Park, CA 94025-1164 (US)
(72) Inventor: Baum, Thomas M., Fuquay-Varina, NC 27526 (US); Grice, Michael E., Fuquay-Varina, NC 27526 (US); Wilson, Thomas M., Sanford, NC 27330 (US); Pinyan, James A., Los Altos, CA 94024 (US); Wald, Stephen E., Raleigh, NC 27607 (US)
(74) Representative: Clayton, Anthony Nicholas

(57) **Abstract**

Insulation displacing connectors (24) of an "inverted" type extend upwardly from a base (14) of the terminal block (12) into connector chambers (66) of driver modules (50) movable relative to the base (14) between upper and lower positions. Passageways (70) within the modules (50) direct service wires (46) moved through the passageways (70) into the connector chambers (66) and into entrance openings (30) underlying upper edge portions (28) of the insulation displacing connectors (24) within the chambers (66). Movement of the module (50) from its upper position to its lower position drives the service wires (46) downwardly from the entrance openings (30) of the connectors (24) into and through slots (32) underlying the entrance openings (30), to establish electrical contact with the service wires (46) and the connectors (24) and, in the case of larger diameter wires, to impale the service wires upon impaling elements (34) resisting pullout of the wires. Downward movement of a module (50) also establishes conductive engagement between the connectors (24) and tip and ring conductors (76) of an overvoltage limiting element (74). Sealant pump chambers (88) within the modules (50) and cooperating sealant pump elements (92) upon.the base (14) of the terminal block (12) introduce reserve sealant material (84) into the modules (50) upon movement of the modules (50) from an upper position to a lower position, to eliminate or at least reduce the size of voids in the sealant material (84). A test clip surface (98) upon the module (50) inclines a test clip (94) attached thereto away from an adjacent clip (94). The modules (50) are driven from their upper positions to their lower positions by thread-forming fasteners (58).

## Description

### Field of the Invention

This invention relates to terminal blocks used by telecommunication companies to connect conductor wires of a multi-core cable to service wires that extend to customer residences or places of business. The invention more specifically relates to an improved terminal block of the type that contains viscous sealant material.

### Background of the Invention

A terminal block of the aforesaid type is usually mounted outdoors. Even when surrounded by a protective housing, it is exposed to rain, snow, sleet, ice, temperature fluctuations, dirt, insect infestation and similar conditions that may adversely affect the electrical connections between the service wires and electrical connectors, which may be of the insulation displacing type, within the blocks. To minimize incursion of foreign matter, viscous sealing material has heretofore been provided within interior areas of prior art terminal blocks. The protection afforded by the sealant material usually is adequate for as long as the original connections between the service wires and the associated insulation displacing connectors remain undisturbed, but has heretofore rapidly decreased in proportion to the number of times that the connections are re-entered (i.e, broken and reestablished) by a telecommunications craftsperson. The decreasing protection is due to the fact that each re-entry displaces some of the sealant and causes the formation therein of voids that permit ingress of air, dirt, moisture, insects and the like. The use of sealant of the gel type minimizes the size of such voids but does not entirely eliminate their formation.

### Summary of the Invention

The present invention provides an improved telecommunications terminal block, of the type containing protective viscous sealant material, that is of compact, durable and economical construction; can be re-entered a large number of times without significant decrease in the efficacy of the protection afforded by the sealant material; provides overvoltage protection when that is desired; and that can be readily installed and used by a craftsperson upon a telephone pole or in other exposed locations to connect service wires having a wide range of gauges.

In its preferred embodiment the terminal block includes an elongate base that is adapted to be secured to a telephone pole or other supportive structure, and further includes at least one and usually a plurality of driver modules that are mounted upon the base in laterally adjacent relationship to each other for individual movement relative to the base between first (illustratively upper) and second (illustratively lower) positions respectively distal from and close to the base. A plurality of pairs of insulation displacing connectors, which may be and preferably are of a novel "inverted" type, projects upwardly from the base at spaced intervals along its length. Lower portions of the connectors are pre-joined to appropriate ones of the wires of a multi-core cable that extends into an interior part of the base filled with conventional potting material. The sections of the paired first and second connectors projecting from the base extend into respective first and second connector tor chambers of an overlying one of the driver modules upon the base. First and second pump chambers within the driver module communicate with respective ones of the connector chambers. First and second passageways extending from an outer surface of the module into the connector chambers direct the ends of first and second insulated service wires, that are inserted into and advanced longitudinally of such passageways by a craftsperson while the module occupies its upper position, into respective first and second ones of the chambers and into entrance openings of respective first and second ones of the insulating displacing connectors within the chambers. Movement of the driver module from its upper position to its lower position displaces the two insulated service wires downwardly into the connectors and establishes electrical contact with respective ones of them. In the case of heavily insulated service wires, the downward module movement also impales the insulation of the service wires upon retainer elements that resist their axial pull-out. The connector chambers, pump chambers and service wire passageways of each module contain protective sealant material, which preferably is of the gel type. When the module includes an overvoltage limiting device, the space within which it is located preferably also contains sealant material.

Each entry of the module disturbs the sealant to some extent, and may create undesirable voids therein. Sealant pump means are provided to compensate for the sealant disturbance, and to eliminate or at least reduce the size of voids created thereby in the sealant. The pump means includes the first and second sealant pump chambers in each driver module that communicate with respective first and second ones of the connector chambers and the service wire passageways of the module, and that contain reserve sealant. The sealant pump means further includes pump piston elements that extend upwardly from the base of the terminal block into aligned ones of the pump chambers of an overlying driver module upon movement of the module from its upper position to its lower position. The aforesaid pump means drives enough reserve sealant material from the pump chambers into the connector chambers and service wire passageways as to eliminate or at least reduce the size of any voids present therein by reason of prior re-entries. The downward module movement also causes engagement of tip and ring contacts upon an overvoltage limiting device with spring contacts upon the insulation displacing connectors, and also establishes contact with a ground bus upon the base.

At least part of each driver module preferably is formed of transparent material permitting exterior viewing of interior components, such as the aforesaid overvoltage limiting device, and monitoring of the correct insertion of the insulated service wires within the connector chambers and connector members of such driver module.

Engageable and disengageable latch means, which includes cooperating latch elements upon each module and upon the base of the terminal block, prevent inadvertent complete removal of a module from the base and provide tactile feedback of the module's arrival at its upper position. Movement of the module from its lower position to its upper position aligns each service wire with a service wire entrance opening of an associated one of the connectors.

To narrow their width and reduce costs, each module preferably is cantilever mounted upon the base, and is driven from its upper position to its lower position by a thread-forming screw that extends through a bore of a mounting chamber adjacent the rear end of the module, and then into an initially unthreaded underlying bore in the base of the terminal block. The screw is sequestered from the sealant material within the module, and therefore does not shear or otherwise disturb the sealant.

Each of the insulation displacing connectors preferably is of an "inverted" type having an upper edge portion that extends between and interconnects upper ends of opposite side edge portions of the connector. A service wire entrance opening in adjacent underlying relationship to the aforesaid upper edge portion of the connector is adapted to initially receive, preferably at an angle of about 30°, the insulated service wire associated with the connector. Each service wire is displaced downwardly from the aforesaid entrance opening into and through a slot extending downwardly from the opening and having longitudinal sections of successively narrower width. Each connector preferably has, adjacent the lower end of the aforesaid slot, a retainer element that impales the insulation upon and thus resists axial pullout of a heavily insulated service wire, and further has a contact that is engaged by a contact of the overvoltage limiting device when the module occupies its lower position.

An upper edge portion of at least one of the two connector chambers of each driver module preferably has a section that slopes so as to cause a thereto connected test clip to extend angularly away from the chamber and from a test clip upon the adjacent chamber. This prevents shorting of the clips against each other.

### Description of the Drawings

FIG. 1 is a front elevational view of a terminal block in accordance with the invention and of service wires extending into driver modules thereof, the rightmost driver module being shown in its upper position and the remaining driver modules being shown in their lower positions;
FIG. 2 is a rear elevational view of the terminal block;
FIG. 3 is an enlarged vertical section taken substantially along the line and in the direction of the arrows 3-3 through the rightmost driver module of Fig. 1, which is shown in its upper position, the associated service wires being shown at a location preliminary to their insertion into the module;
FIG. 4 is a view similar to Fig. 3, but taken in the direction of the arrows 4-4 of Fig. 1 and showing the driver module and service wires in their lower positions;
FIG. 5 is a front, right, top isometric view of the terminal block wherein the right-most driver module and components thereof are shown in exploded relationship;
FIG. 6 is a bottom plan view of a driver module;
FIG. 7 is a view showing at its left side a top plan view of a driver module, at its right side a top plan view of the part of the base underlying a driver module, and showing in its central portion and primarily in horizontal section components of the driver module and some associated components carried by the base of the terminal block;
FIG. 8 is a front elevational view of one of the insulation displacing connectors of the terminal block;
FIG. 9 is a laterally foreshortened view partially in elevation and partially in vertical section of test clips secured to upper end portions of driver module connector chambers and therein disposed insulation displacing connectors;
FIGS. 10a, b, and c are fragmentary front elevational views of the insulation displacing connector of Fig. 8 showing sequential positions occupied by a heavily insulated service wire during movement thereof from an upper part to a lower part of the connector;
FIGS. 11a, b, and c are front elevational views of the connector of Fig. 8, showing sequential positions occupied by a lightly insulated service wire during movement thereof from an upper part to a lower part of the connector, and also showing a conductor of the multi-wire bundle within the base of the terminal block;
FIG. 12 is a front elevational view showing preferred dimensions and angulations of the illustrated insulation displacing connector;
FIG. 13 is a right side elevational view of the connector shown in Fig. 12;
FIG. 14 is an enlarged front elevational view showing additional preferred dimensions and angulations of that part of the connector within the area bordered by the phantom line A in Fig. 12;
FIG. 15 is an enlarged fragmentary front elevational view showing additional preferred dimensions of that part of the connector bordered by the phantom line B in Fig. 12;
FIG. 16 is an enlarged fragmentary sectional view, showing additional preferred dimensions and taken in the direction of the arrows 16 through the connector of Fig. 12;
FIG. 17 is an enlarged sectional view, rotated 30° in a clockwise direction, showing additional preferred dimensions and taken approximately along the line and in the direction of the arrows 17 through the connector of Fig. 12; and
FIG. 18 is a view similar to Fig. 17 but showing an alternative embodiment.

### Description of the Preferred Embodiment

The terminal block identified in its entirety in the drawings by the numeral 12 includes an elongate base 14 that may be of any desired length. Base 14 illustratively extends horizontally and is of generally rectangular shape. A multi-core cable 16 extends into a rearward section of base 14 from one end of the base. A plurality of bosses 18 projects upwardly from base 14 at laterally spaced locations along its length. Each boss 18 has a low barrier wall 20 that extends transversely across a central part of the boss and rearwardly from it. First and second slots 22 upon opposite sides of the wall 20 of each boss 18 extend vertically through such boss and the upper wall of base 14. The first and second slots 22 within each boss 18 respectively lie in generally vertical first and second planes that extend in substantially parallel transversely spaced relationship to each other, and in nonparallel relationship to a vertical plane containing the longitudinal axis of base 14.

First and second insulation displacing connectors 24 extend vertically through respective ones of the first and second slots 22 in each boss 18. Each connector 24 preferably is formed of beryllium copper alloy No. C17200 that has an extra hard temper and a minimum yield of 165 Ksi. The lower section of each connector 24 within base 14 is connected to an appropriate one of the wires 16' of cable 16, after which the interior of the base is filled with a suitable potting material. This preferably is done at the location where bases 14 are fabricated.

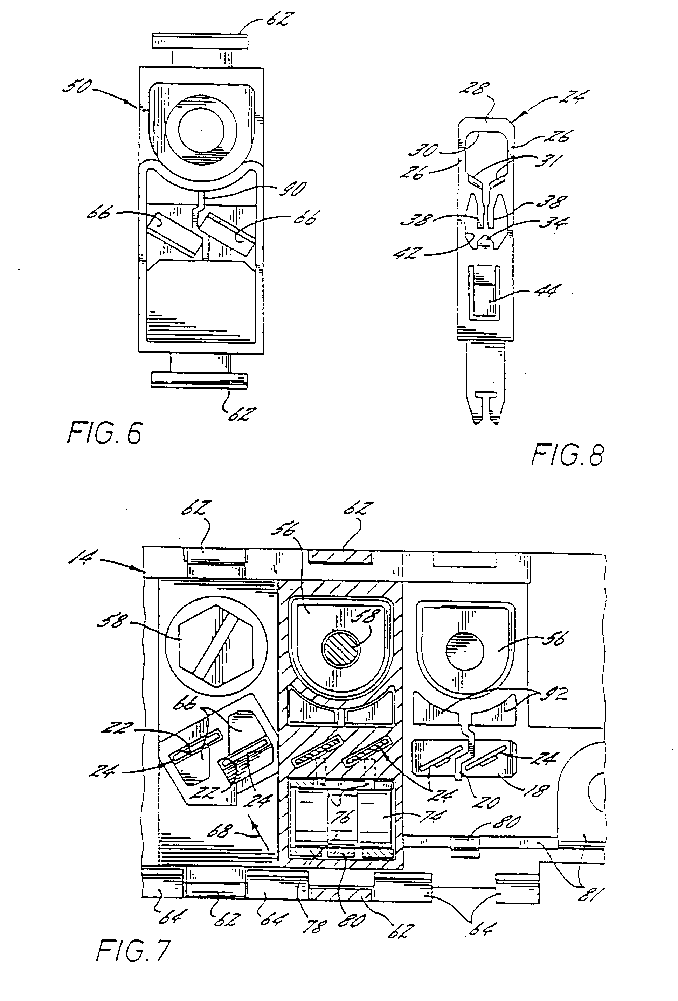

As is best shown in Figs. 8, 10 and 11, the part of each connector 24 above base 14 has longitudinally extending opposite side edge portions 26 that constitute primary spring elements of the connector. Connector 24 further has an upper edge portion 28 that interconnects the upper ends of side edge portions 26 and stiffens them to such an extent as to eliminate the need for "stop" members that limit outward movement of edge portions 26. A service wire entry opening 30 in adjacent underlying relationship to upper edge portion 28 extends transversely through each connector 24. Lower edge portions 31 of opening 30 have upwardly facing sharp cutting surfaces. A vertical slot 32 within the central part of connector 24 communicates at its upper end with opening 30 and extends downwardly from it. Slot 30 decreases in width from its upper to its lower end, and terminates above an upwardly extending impaling element 34 of the connector. The opposite sides of slot 32 are bordered by confronting edges of elongate secondary spring elements 38 that extend downwardly in cantilever fashion from the upper part of connector 24, have free rounded lower ends, and are bordered along most of their length by a generally kidney-shaped opening 42 of connector 24. During use of connector 24, spring elements 26 and 38 undergo resilient lateral bending movement. The secondary spring elements 38 also undergo torsional flexure about their longitudinal axes. A contact element 44 having a downwardly sloping upper surface projects outwardly from each connector 24 below impaling element 34.

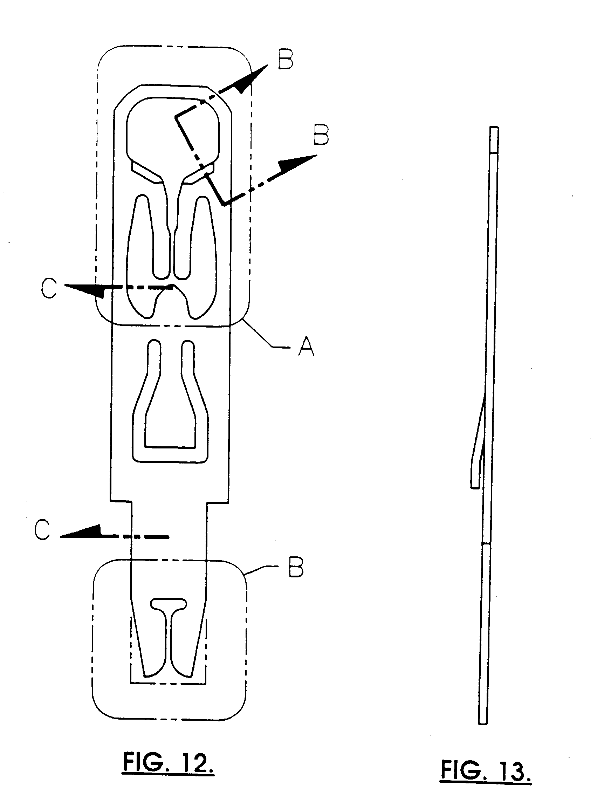

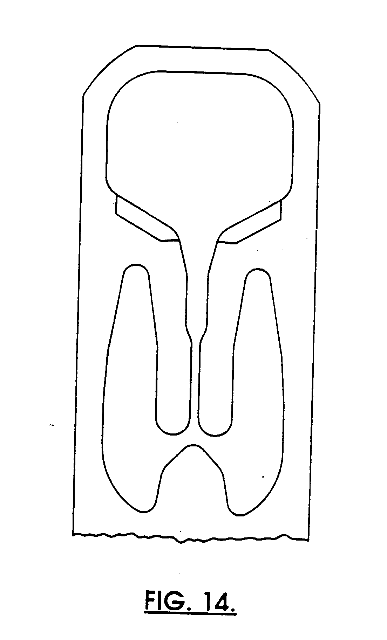

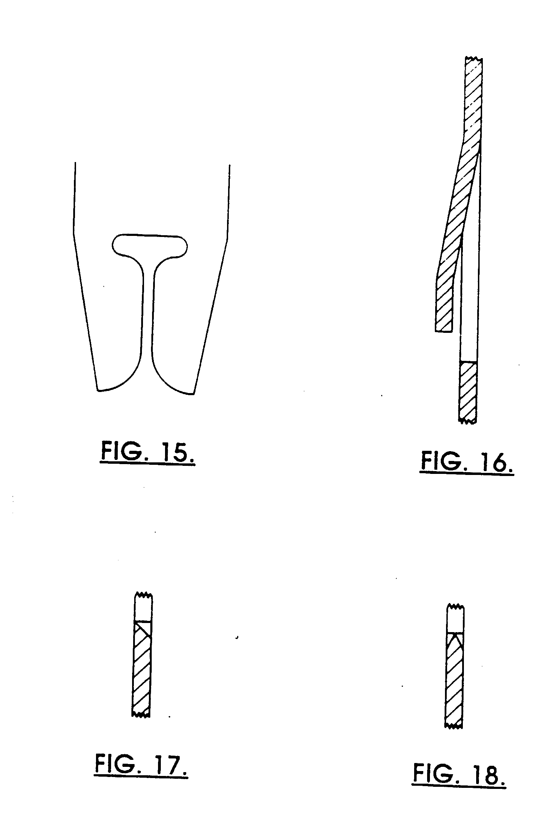

The illustrated connector 24 is particularly suited for use with insulated service wires ranging from eighteen and one-half gauge copper coated steel conductors through twenty-four gauge solid copper. It has a thickness of twenty-thousandths of an inch. Figs. 12-16 of the drawings show other preferred dimensions (in inches) of connector 24. The more significant dimensions are identified by the letters CF.

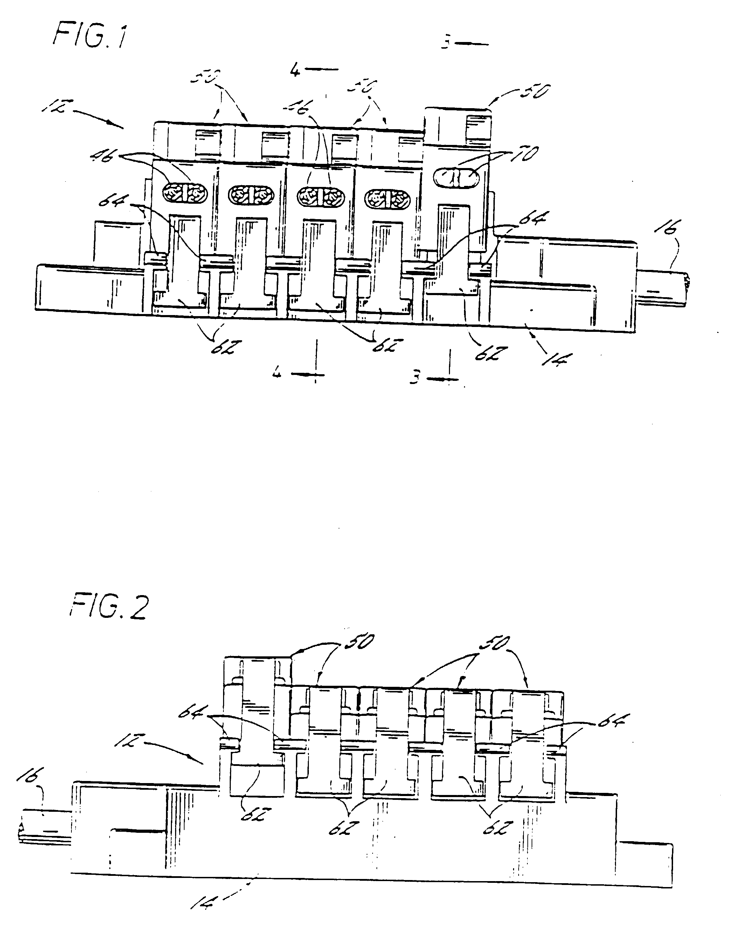

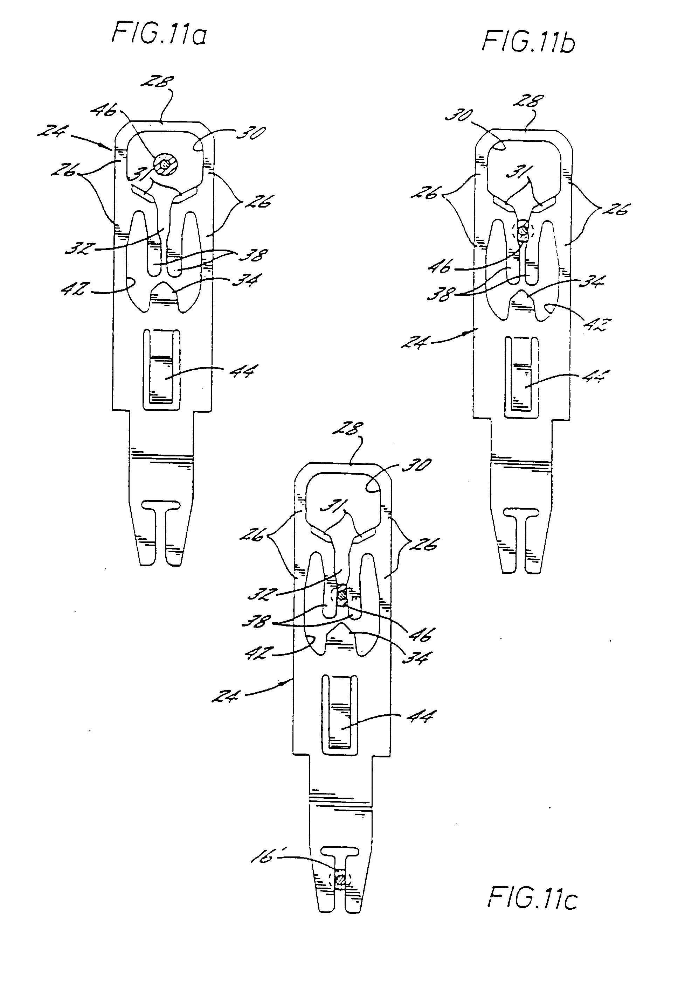

The entry opening 30 of each connector 24 is adapted to receive service wires 46 as heavily insulated as that shown in Figs. 1, 3, 4, and 10, or as lightly insulated as that of the service wire shown in Fig. 11. Whether heavily or lightly insulated, the service wires 46 introduced into entry opening 30 of a connector 24 preferably define an entry angle with the connector that is substantially less than 90° and preferably is about 30°.

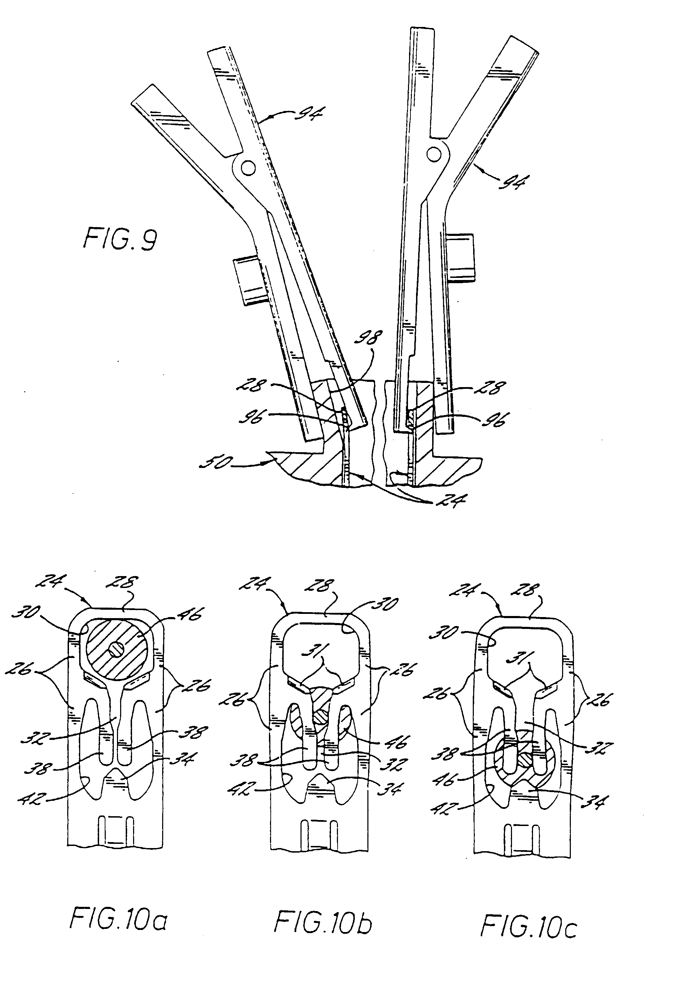

Referring now particularly to Figs. 10a, 10b and 10c, the relatively heavy insulation of the illustrated service wire 46 introduced into opening 30 and then moved downwardly therefrom is initially cut by the sharp edges 31 adjacent the bottom of opening 30. As service wire 46 is displaced downwardly into and through slot 32, the thereto adjacent confronting edges of secondary spring elements 38 engage, as shown in Fig. 10b, the central metal conductor of service wire 46. Final downward movement of the service wire impales its insulation upon the impaling element 34 underlying slot 32, as shown in Fig. 10c. Movement of the heavily insulated service wire 46 into and through slot 32 deflects spring elements 26, 38 outwardly, and also causes torsional deflection of secondary spring elements 38. The torsional deflections of spring e!ements 38 contribute significantly to the fact that such elements are not strained beyond their elastic limits by passage of heavily insulated service wires 46 through slot 32. Upon return movement of service wire 46 upwardly to opening 30 the spring elements therefore resiliently return to their undeflected positions shown in Figs. 8 and 10a.

When the service wire 46 is relatively lightly insulated, such as shown in Figs. 11a, 11b and 11c, downward movement thereof from entry opening 30 into slot 32 occurs with little if any engagement between wire 46 and sharp edges 31 of opening 30. Substantially all of the cutting of the insulation of the lightly insulated service wire is done by the confronting edges of secondary spring elements 38. The primary spring elements 26 undergo little if any deflection, and the lowermost position of the lightly insulated service wire 46 is considerably above impaling element 34, as shown in Fig. 11c. Service wires having insulation of a size intermediate that of the illustrated heavily and lightly insulated wires 46 will produce spring element deflections intermediate those produced by the wires shown in Figs. 10 and 11.

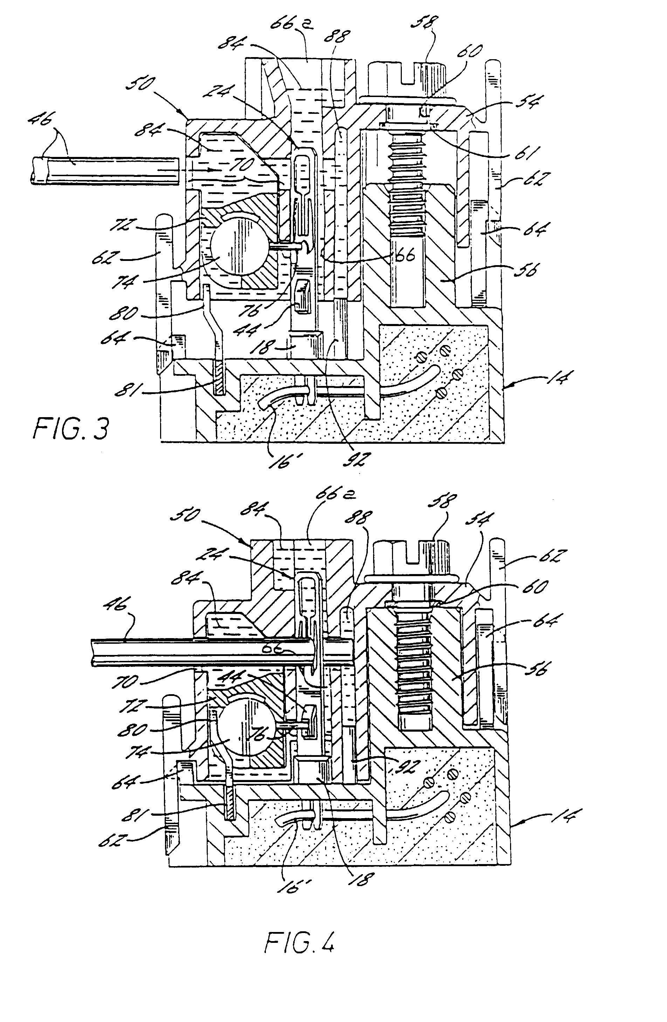

A plurality of driver modules 50 is mounted in laterally adjacent relationship to each other along the length of base 14 for vertical movement relative to the illustratively horizontally extending base and to each other between a first, illustratively upper position and a second, illustratively lower position. The modules preferably are formed of transparent durable plastic such as LEXAN®. Each module 50 is cantilever mounted upon a rearward part of base 14 by mounting means that includes a mounting chamber 54 within the rear part of the module, and an underlying mounting post 56 that extends upwardly from base 14 into the therewith vertically aligned chamber 54. The mounting means further includes a rotatable fastener 58, which illustratively and preferably is a thread-forming screw, having a driver head that overlies the upper surface of chamber 54. A threaded shank of fastener 58 extends through a bore 60 in the chamber's top wall, a captive washer 61 and into an initially unthreaded axially aligned bore within the post 56 underlying chamber 54. Rotation of fastener 58 in the appropriate "tightening" direction forms screw threads in the bore of post 56 and drives module 50 downwardly from its upper position shown in Fig. 3 to its lower position, shown in Fig. 4, wherein the upper wall of chamber 54 abuts the upper surface of mounting post 56. Return upward movement of module 50 is effected, when desired, by reverse rotation of fastener 58. Canting or tilting of module 50 during and following vertical movement thereof is prevented by, among other things, engagement between the exterior surfaces of mounting post 56 and the complementarily shaped confronting inner surfaces of mounting chamber 54.

Engageable and disengageable latch means prevent inadvertent removal of each driver module 50 from base 14, while permitting movement of the module relative to the base from the module's upper position shown in Fig. 3 to its lower position shown in Fig. 4. The latch means includes resilient latch elements 62 that extend vertically in laterally spaced and generally parallel relationship to the front and rear surfaces of each module 50 and that are permanently connected intermediate their length to the module. The latch means further includes cooperating latch elements 64 that are connected to and extend forwardly and rearwardly from base 14. During initial installation of a module 50 upon base 14, downward movement of the module causes the lower end of each latch element 62 to engage a sloping cam surface upon an underlying latch element 64. The elements 62 are cammed outwardly by such engagement, and then resiliently return to a position beneath latch element 64. The latch elements 62, 64 then permit movement of the module 50 between its upper position of Fig. 3 and its lower position of Fig. 4, but prevent inadvertent complete withdrawal of the module from base 14. The latches also provide tactile feedback, in the form of increased resistance to reverse rotation of screw 58, that lets a telecommunications craftsperson know when a module reaches its upper position. Tactile feedback of arrival of the module at its lower position is provided by the then increased resistance to tightening rotation of fastener 58.

The first and second insulation displacing connectors 24 extending upwardly from each boss 18 upon base 14 are received within respective first and second laterally adjacent connector chambers 66 that extend vertically through each module 50. The two chambers 66 are laterally separated from each other by a vertical barrier wall 90 best shown in Fig. 6. Wall 90 is formed of dielectric plastic material and overlies the wall 20 of the adjacent boss 18 upon base 14. Chambers 66 are forwardly of and in noncommunicating relationship with the module chamber 54 through which fastener 58 extends. As is best shown in Figs. 3 and 4, the width of each chamber 66 decreases with increasing distance from the lower end to the upper end of the connector 24 within the chamber. Adjacent its upper end each chamber 66 has a wider test port area 66a. The two connectors 24 within each module 50 lie in parallel laterally spaced vertical planes that extend in angular oblique relationship to a vertical plane containing the longitudinal axis of terminal block 12. When viewed perpendicularly to their major surfaces, i.e., in the direction of the arrow 68 of Fig. 7, the two connectors 24 of each pair have overlapping side edge portions. The aforesaid orientations of the connectors relative to each other and to base 14 contribute significantly to the compact construction of terminal block 12.

First and second laterally adjacent passageways 70 extend through the front wall of each driver module 50 and into respective first and second ones of the chambers 66 containing insulation displacing connectors 24. When a telecommunication craftsperson inserts first and second service wires 46 as far as they will go into respective first and second ones of the passageways 70 of a module 50 occupying its upper position, the leading ends of the customarily black service wires extend into respective first and second ones of the module's chambers 66 and also into and through the entry openings 30 of respective first and second ones of the insulation displacing connectors 24 within chambers 66. The transparent construction of the module permits visual verification of the position of the wires, particularly when the module is either colorless or of a color other than black. When module 50 is moved downwardly from its upper position to its lower position, illustratively and preferably by rotation in the appropriate direction of thread-forming fastener 58, each service wire 46 is moved downwardly into and through the slot 32 of the associated connector 24 to its final position adjacent the lower end of the slot and wherein its inner metallic conductor is in engagement with connector 24. The final position of a heavily insulated service wire 46 is below that of a lightly insulated wire. This is due to the fact that a lightly insulated wire is not engaged and moved downwardly by the upper surface of the surrounding passageway 70 until after module 50 has moved downwardly a significant extent. As previously noted, each heavily insulated service wire 46 is also impaled in its lowermost position by the impaling element 34 which resists axial pull-out of the service wire.

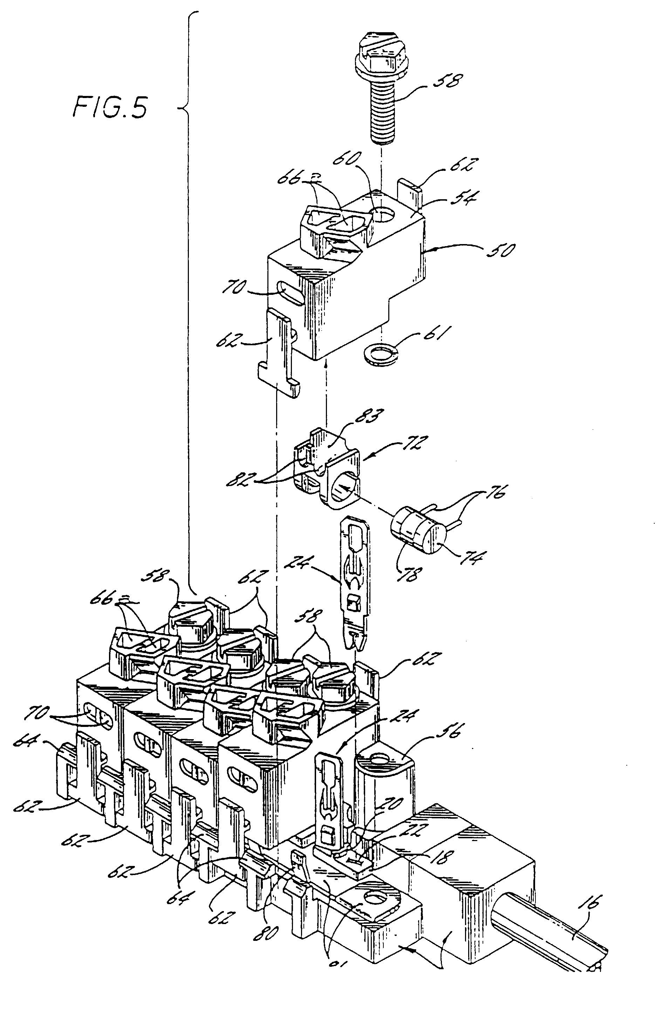

Movement of module 50 to its lower position effects engagement of the lower end of each barrier wall 90 of the module with the upper end of the barrier wall 20 of the underlying boss 18 of base 14. Such movement of module 50 also downwardly displaces a component 72 thereof, best shown in Fig. 5, from its upper position shown in Fig. 3 to its lower position shown in Fig. 4. When overvoltage protection is desired, the component 72 of each module contains a cylindrical overvoltage limiting device 74. Device 74 has first and second tip and ring contacts 76 extending radially therefrom to locations respectively adjacent first and second ones of the insulation displacing connectors 24. Device 74 also has an arcuate ground contact 78 upon its cylindrical outer surface. As shown in Fig. 4, downward movement of component 72 and device 74 brings tip and ring contacts 76 into engagement with respective ones of the projecting contacts 44 upon first and second ones of the connectors 24, and also brings the contact band 78 of device 74 into engagement with an upwardly extending arm 80 of a ground bus 81 that is mounted upon and extends longitudinally of base 14. If for any reason overvoltage protection is not desired, a component 72 not having an overvoltage device may be substituted for the illustrated component 72. The unprotected component (not shown) preferably is of a color clearly different from that of the protected component. As is also shown in Fig. 5, the service wire passageways 70 of each driver module 50 are defined in part by first and second channels 82 that extend through and open from the upper portion of module component 72 upon opposite sides of a vertically extending partition 83 that laterally separates the service wires within respective ones of the channels.

As is best shown in Figs. 3 and 4, viscous protective sealant material 84, which preferably is a gel of the type disclosed in U.S. Patents Nos. 4,634,207 and 4,864,725, is provided within and substantially fills the chambers 66, passageways 70 and the space about component 72 of each driver module 50. In conjunction with barrier walls 20, 90, sealant 84 isolates the adjacent connectors 24 of a module 50 from each other and from the ambient environment, particularly when the module 50 occupies its lower position. Since the sealant 84 within the front lower part of module 50 then is closely adjacent base 14, such sealant and the underlying part of the base similarly isolate overvoltage limiting device 74 and the electrical contacts associated therewith from the ambient environment.

Movement of service wires 46 into and from a module disturbs the sealant material 84, particularly when the sealant is not a gel, and may cause the formation of voids in it. Voids substantially reduce the protection afforded by the sealant. The protection decreases in proportion to the number of re-entries, and in prior terminal blocks using non-gel sealant may become deficient after a relatively small number of reentries.

In order to eliminate or at least substantially reduce the size of voids in the sealant material 84 within chambers 66, passageways 70 and other critical areas of driver module 50, the block is provided with sealant pump means. The pump means includes first and second sealant pump chambers 88 that extend upwardly through the bottom of each module 50 to an elevation at or (as shown) above that of service wire passageways 70, and that communicate with such passageways and through them with respective first and second ones of the module's connector chambers 66. Chambers 88 contain reserve sealant material. Each chamber 88 has an arcuate rear wall that engages and conforms to the curvature of the arcuate front wall of the thereto adjacent post 56 upon base 14. The sealant pump means further includes first and second pump piston elements 92 that extend upwardly from base 14 and, when the overlying module 50 occupies its lower position shown in Fig. 4, into the open lower end portions of respective first and second ones of the module's pump chambers 88. Pump piston elements 92 each have peripheral front, rear and side surfaces that slidably and closely engage and conform to the shape of the thereto confronting surfaces of the associated pump chamber 88.

After service wires 46 are inserted into an upwardly positioned module 50, downward movement of the module to its lower position of Fig. 4 causes pump piston elements 90 to enter the lower end portions of respective overlying ones of the module's pump chambers 88. This displaces reserve sealant 84 from pump chambers 88 into connector chambers 66, passageways 70 and other module areas (including that containing overvoltage limiting device 74) communicating therewith. Such displacement compresses the sealant material within the aforesaid areas and thereby eliminates or at least reduces the size of any voids therein. This highly desirable result occurs automatically, whenever a module 50 is re-entered, for as long as the pump chambers 88 contain sufficient reserve sealant.

When a driver module 50 occupies its lower position as shown in Fig. 4, the upper ends of the insulation displacing connectors 24 within respective ones of the module's chambers 66 are below the upper end of the chambers and the upper surface of the sealant material 84 therein. A telecommunications craftsperson attaching a test clip to the upper part of connector 24 therefore must insert an end of the test clip into the sealant material and, upon completion of the circuit testing, withdraw the test clip from such material. Withdrawal of the test clip from association with a conventional insulation displacing connector, of the type having an open upper end, may cause withdrawal of some of the sealant material. Removal of sealant material 84 by a test clip applied to the upper end of one of the present insulation displacement connectors 24 is less likely to occur since the upper edge portion 28 of the connector resists movement of the sealant with the test clip as the clip is withdrawn.

Fig. 9 shows test clips 94 that engage the upper edge portion 28 of connectors 24 and that each have a pin or tooth element 96 that extends into the opening 30 of the associated connector. This minimizes the possibility of inadvertent slippage of test clips 94 from connectors 24.

As is also shown in Fig. 9, the upper edge portion of at least one (illustratively the leftmost one) of the two connector chambers 66 of each module 50 preferably is provided with a sloping portion 98 which causes the test clip 94 secured thereto to extend angularly outwardly away from the central axis of such chamber and away from the test clip secured to the other chamber of the module. This minimizes the possibility of contact between and shorting of the test clips.

In addition to its previously discussed functions, the sealant material 84 surrounding and encapsulating overvoltage device 74 protects its previously sealed air gap (not shown) or itself acts as a dielectric when present in the gap.

Terms such as "upper," "lower," "vertically," "horizontally," etc., are used herein only in a relative sense, and not in an absolute sense. For instance, the "upper" position may be considered an "open" position, and the "lower" position may be considered a "closed" position.

Claim dependencies have been drafted to comply with PCT Rule 6.4, but it will be understood that, at least by virtue of this paragraph, any appropriate combination of the features disclosed and/or claimed herein is in itself an embodiment of the invention, and it is intended to use multiple dependent claims in the national phase where permitted.

While a preferred embodiment of the invention has been shown and described, this was for purposes of illustration only, and not for purposes of limitation, the scope of the invention being in accordance with the following claims.

To summarize, the invention provides a terminal block comprising:
(1) a base;
(2) an insulation displacing connector (IDC) secured to the base;
(3) a driver which can be moved relative to the IDC between an open position and a closed position; and
(4) a passageway through which, when the driver is in the open position an insulated wire can be passed so that it is in the region of the IDC;
the components (1) to (4) being arranged so that when an insulated wire is passed through the passageway so that it is in the region of the IDC and the driver is moved from the open position to the closed position, the IDC displaces the insulation on the insulated wire and makes electrical contact with the wire, said terminal block having at least one of the following characteristics:
(A) the IDC comprises an elongate metal body having opposite side edge portions, an upper edge portion interconnecting said side edge portions, a conductor inlet opening below said upper edge portion, and a slot communicating with and extending from said inlet opening,
(B) the terminal block further comprises a connector chamber which contains sealant material, or into which sealant material can be placed, said sealant material protecting a connection made between the IDC and an insulated wire; and
   a pump for introducing sealant material into the chamber;
(C) the terminal block further comprises a mounting member which is mounted on the base as a cantilever and whose position can be changed to move the driver between the open and closed positions;
(D) the terminal block further comprises means for indicating when the driver has reached at least one of the open and closed positions;
(E) the base is rectangular and has a longitudinal axis;
   first and second insulation displacing connectors are mounted on said base:
   said first and second insulating displacing connectors respectively lie in first and second generally parallel laterally spaced planes that extend generally vertically, when the base is horizontal, in oblique relationship to a generally vertically extending plane containing said longitudinal axis of said base; and
   said first and second insulation displacing connectors have as viewed perpendicularly to said first and second planes, when the base is horizontal, overlapping side edge portions;
(F) the drive comprises an overvoltage limited device.

The pump may include a pump chamber within said driver, said pump chamber being in spaced adjacent relationship to said connector chamber and containing a reserve supply of said sealant material. The pump preferably includes a sealant pump element upon said base. Advantageously, the pump element may engage and undergo sliding movement relative to a pump chamber of a confronting surface of said driver during movement of said driver relative to said base.

The terminal block may further include engageable and disengageable latch means for releasably securing said driver in said open position thereof. Advantageously, the terminal block further includes driver moving means for moving said driver from said open position to said closed position, said driver moving means being spaced from said connector chamber of said module. The terminal block may include engageable and disengageable latch means for, when engaged, preventing removal of said driver from said base.

In preferred embodiments, a vertical plane containing said insulation displacing connector and a vertical plane containing the central axis of said base of said driver extend in oblique angular relationship to each other at an angle of about 30°.

Preferably, the overvoltage limiting device has a contact engageable with said connector upon movement of said driver to said closed position thereof. The driver is preferably formed at least in part of transparent material permitting exterior viewing of the interior thereof. The base preferably has an upwardly extending boss thereon, and said insulating displacing connector extends through and upwardly from said boss.

The terminal block may include a thread-forming fastener for driving said driver to said closed position thereof. There may be a mounting post upon said base, said base having a bore into which said fastener extends and forms screw threads.

Preferably, the terminal block further comprises a mounting chamber in said driver that closely receives said mounting post and has interior surfaces in sliding engagement with confronting exterior surfaces of said mounting post, said engagement preventing significant canting of said driver during movement thereof between said open and closed positions. Advantageously, there may be aligned bores within said driver and said base, and a thread-forming fastener extending into said bores and effective upon tightening rotation thereof to drive said driver downwardly to said closed position thereof.

The IDC preferably further comprises a conductor impaling element. The impaling element may be adjacent an end of said slot. The side edge portions may constitute primary spring elements, and there may be first and second secondary spring elements bordering first and second opposite sides of said slot. Each of said secondary spring elements may have a first end connected to the main body of said connector, and extend in cantilever fashion from said first end thereof to an opposite free end thereof. The slot in said insulation displacing connector preferably decreases in width with increasing distance from said inlet opening. Advantageously, the slot may have discrete sections along the length thereof of progressively decreasing width.

Preferably, the terminal block further includes dielectric sealant material about said overvoltage limiting device.

## Claims

1. A re-enterable telecommunications terminal block for making and breaking connections with an insulated wire conductor, comprising:
(i) a base;
(ii) an insulation displacing connector extending upwardly from said base and having an entry opening for receiving said conductor;
(iii) a driver module mounted upon said base for movement relative thereto between an upper position and a lower position; said driver module having a connector chamber into which said insulation displacing connector extends, and a passageway for passing said insulated wire conductor into said connector chamber and said entry opening of said connector;
(iv) protective sealant material within said connector chamber and said passageway; and
(v) sealant pump means for introducing additional protective sealant material into said connector chamber in response to movement of said driver module to said lower position thereof.

2. A terminal block according to Claim 1, wherein said pump means includes a pump chamber within said driver module, said pump chamber being in spaced adjacent relationship to said connector chamber and containing a reserve supply of said protective sealant material.

3. A terminal block according to claim 1 or claim 2, wherein said sealant pump means includes a sealant pump element upon said base.

4. A terminal block according to any preceding claim, wherein said sealant pump means includes a pump element upon said base that engages and undergoes sliding movement relative to a pump chamber of a confronting surface of said module during said movement of said module relative to said base.

5. A terminal block according to any preceding claim, wherein said sealant pump means includes a pump element upon said base, said pump element entering said pump chamber upon movement of said module to said lower position.

6. A terminal block according to any preceding claim, wherein said insulating displacing connector comprises an elongate body formed of electrically conductive material, said body having opposite side edge portions, and an upper edge portion extending between said interconnecting said side edge portions, said entry opening underlying said upper edge portion and initially receiving the conductor.

7. A terminal block according to any preceding claim, and further including engageable and disengageable latch means for releasably securing said driver module in said upper position thereof.

8. A terminal block according to any preceding claim, wherein said driver module is cantilever mounted adjacent one end thereof to said base.

9. A terminal block according to any preceding claim, and further including driver means for moving said driver module from said upper position to said lower position, said driver means being spaced from said connector chamber of said module.

10. A terminal block according to any preceding claim, and further including engageable and disengageable latch means for, when engaged, preventing removal of said module from said base.

11. A terminal block according to any preceding claim, wherein a vertical plane containing said insulating displacing connector and a vertical plane containing the central axis of said base of said driver module extend in oblique angular relationship to each other at an angle of about 30°.

12. A terminal block according to any preceding claim, and further including a second insulation displacing connector extending upwardly from said base, said first insulation displacing connector and said second insulation displacing connector respectively lying in first and second generally vertically extending planes that extend in generally parallel relationship to each other and in non-parallel relationship to a vertical plane extending through and longitudinally of said base, said driver module further including a second passageway extending in generally parallel relationship to said first passageway for conducting a second insulated wire conductor to said second one of said insulation displacing connectors.

13. A terminal block according to any preceding claim, wherein said driver module further includes an overvoltage limiting element having a contact engageable with said connector upon movement of said driver module to said lower position thereof.

14. A terminal block according to any preceding claim, wherein said connector chamber of said driver module has an end wall having a sloping surface causing a test clip secured thereto to extend angularly outwardly away from said chamber.

15. A terminal block according to any preceding claim, wherein said driver module is formed at least in part of transparent material permitting exterior viewing of the interior of said module.

16. A terminal block according to any preceding claim, and further including a thread-forming fastener for driving said module to said lower position thereof.

17. A terminal block according to any preceding claim, wherein said base has an upwardly extending boss thereon, and said insulation displacing connector extends through and upwardly from said boss.

18. A terminal block according to any preceding claim, and further including aligned bores within said driver module and said base, and a thread-forming fastener extending into said bores and effective upon tightening rotation thereof to drive said driver module downwardly to said lower position thereof.
